# EUROPEAN PATENT APPLICATION

(11) **EP 4 668 440 A1**
(43) Date of publication of application: **24.12.2025**
(21) Application number: 23922273.0
(22) Date of filing: 25.08.2023
(51) Int. Cl.: H01M 50/244, H01M 50/24

(54) **BATTERY CASE**

(30) Priority: 14.02.2023 CN 202320268819 U
(71) Applicant: Sungrow Power Supply Co., Ltd., Hefei, Anhui 230088 (CN)
(72) Inventor: HUANG, Shuqiang, Hefei, Anhui 230088 (CN); MAO, Junjie, Hefei, Anhui 230088 (CN)
(74) Representative: Epping - Hermann - Fischer
(86) International application number: PCT/CN2023/114947
(87) International publication number: WO 2024/169150

(57) **Abstract**

Disclosed in the present application is a battery case, comprising at least: a fixing base, which is provided with a protrusion or a sealing frame on a top face thereof; at least one battery cell, which is arranged on the fixing base, the protrusion or the sealing frame being provided on a top face and a bottom face of the battery cell, respectively; a sealing member, which is located between a surface on which the protrusion is located and the sealing frame, and is pressed by the surface on which the protrusion is located and the sealing frame; and a switch module, which is arranged on the battery cell, the protrusion or the sealing frame being provided on the surface of the switch module that is in contact with the battery cell, wherein the fixing base and/or the switch module abut against the battery cell by means of the protrusion or the sealing frame. The battery case disclosed in the present application has an improved waterproof sealing performance.

## Description

This application claims the priority to the Chinese Patent Application No. 202320268819.0, titled "BATTERY CASE", filed on February 14, 2023 with the China National Intellectual Property Administration, which is incorporated herein by reference in its entirety.

### FIELD

The present application relates to the technical field of energy storage batteries, and in particular to a battery case.

### BACKGROUND

As emerging energy technologies such as solar energy and wind energy gradually mature, residential micro power plants have become a choice for more and more families. A residential energy storage apparatus is an essential part of a residential micro power plant and includes multiple energy storage battery modules, which stores electrical energy during periods of surplus and releases electrical energy during power shortages.

However, residential energy storage apparatuses are generally installed in environments such as outdoors or garages, and have poor waterproof and sealing performances, which may lead to the decline of the performance of the energy storage battery modules and directly affect the operational safety of residential energy storage products, thereby affecting the life safety of operators.

### SUMMARY

An object of the present application is to provide a battery case that reduces the number of parts of the battery case, thereby simplifying the sealing structure of the battery case and improving the waterproof and sealing performance of the battery case.

A battery case is provided according to the present application, at least including:
a fixing base, a top surface of which is provided with a protruding portion or a sealing frame;
at least one battery pack, arranged on the fixing base, where one of a top surface and a bottom surface of the battery pack is provided with the protruding portion, and the other of the top surface and the bottom surface of the battery pack is provided with the sealing frame;
a sealing member, located between the surface provided with the protruding portion and the sealing frame, and compressed by the surface provided with the protruding portion and the sealing frame; and
a switch module, arranged on the at least one battery pack, where a surface of the switch module in contact with the at least one battery pack is provided with the protruding portion or the sealing frame;
where the fixing base and/or the switch module abut against the battery pack through the protruding portion or the sealing frame.

In an embodiment of the present application, there is a height difference between the protruding portion and the sealing frame, and the height difference is smaller than a maximum compression amount of the sealing member.

In an embodiment of the present application, the cross-section of the sealing frame is rectangular.

In an embodiment of the present application, a surface of the sealing member in contact with the sealing frame is an arc surface.

In another embodiment of the present application, the sealing frame includes a flanged structure, and the sealing member is in contact with the flanged structure of the sealing frame.

In an embodiment of the present application, the surface of the sealing member in contact with the sealing frame is flat.

In another embodiment of the present application, the surface of the sealing member in contact with the sealing frame is a corrugated surface.

In an embodiment of the present application, the battery pack includes a housing, the protruding portion or the sealing frame is integrally formed with the housing, and the sealing member is arranged between the protruding portion and a surface of the housing provided with the sealing frame.

In an embodiment of the present application, the battery pack includes a signal port, and the signal port is located inside the sealing frame and extends from a surface of the battery pack to the interior of the battery pack.

In an embodiment of the present application, the battery pack includes a buffer portion, and the buffer portion is located in a space enclosed by the protruding portion, the sealing frame, and the sealing member.

A battery case provided according to the present application can reduce the number of parts used in the sealing structure, thereby simplifying the sealing structure of the battery case, facilitating the disassembly and assembly of sub-modules of the battery case, and further improving comprehensive economy of the battery case. Additionally, the waterproof and sealing performance of the battery case is improved while simplifying the structure, and the Ingress Protection (IP) Rating of the battery case is improved, thereby improving the service life and operational safety of the battery case.

### BRIEF DESCRIPTION OF THE DRAWINGS

In order to more clearly illustrate technical solutions of embodiments of the present application, drawings used in the description of the embodiments are briefly described hereinafter. It is apparent that the drawings described below only show some of the embodiments of the present application, and other drawings may be obtained based on the drawings by those skilled in the art without any creative work.
FIG. 1 is a schematic structural view of a battery case according to an embodiment of the present application;
FIG. 2 is a schematic structural view of a first battery pack according to an embodiment of the present application;
FIG. 3 is a schematic view showing an internal structure of a first battery pack according to an embodiment of the present application;
FIG. 4 is a schematic structural view of a second battery pack according to an embodiment of the present application;
FIG. 5 is a cross-sectional view of a first battery pack and a second battery pack according to an embodiment of the present application;
FIG. 6 is a partially enlarged view of part A shown in FIG. 5;
FIG. 7 is a cross-sectional view of a sealing member according to an embodiment;
FIG. 8 is a cross-sectional view of a sealing member according to another embodiment.

Reference numerals in the drawings are listed as follows:

| | | | |
|---|---|---|---|
| 110 | fixing base, | 111 | support leg, |
| 120 | first battery pack, | 121 | first housing, |
| 1211 | first surface, | 122 | sealing frame, |
| 123 | signal port, | 124 | edge area, |
| 125 | battery module, | 126 | signal terminal, |
| 127 | electrical module, | 130 | second battery pack, |
| 131 | second housing, | 1311 | second surface, |
| 132 | sealing member, | 133 | signal interface, |
| 134 | buffer portion, | 135 | protruding portion, |
| 140 | switch module. | | |

### DETAILED DESCRIPTION OF THE EMBODIMENTS

The solutions in the embodiments of the present application are described clearly and completely hereinafter in conjunction with the accompanying drawings in the embodiments of the present application. It is apparent that the described embodiments are only part of the embodiments of the present application and not all of the embodiments. Based on the embodiments in the present application, all other embodiments obtained by those skilled in the art without creative efforts fall within the protection scope of the present application.

It should be noted that, structures, proportions, sizes and the like illustrated in the drawings of the specification are only used to match the contents disclosed in the specification for those skilled in the art to understand and read, and are not intend to limit the conditions for the implementation of the solutions, and thus have no technical substantive significance. Any modification of structure, change of proportional relationship, or adjustment of size, without affecting the efficacy and purpose of the solutions, should still fall within the scope of the technical contents disclosed in the solutions. Meanwhile, terms such as "upper", "lower", "left", "right", "middle", and "one" used in this specification are merely for the convenience of clear description and are not intended to limit the scope of implementation of the solutions. Changes or adjustments to these relative relationships, without substantial change of the technical content, should also be regarded as falling within the scope of implementation of the solutions.

Lithium-ion batteries have the advantages of high safety, high energy density, long cycle life, and low cost, and are widely used in energy storage power systems such as hydropower plants, thermal power plants, wind farms, and solar power plants, as well as in various fields such as electric tools, electric bicycles, electric motorcycles, electric vehicles, special equipment, and special aerospace applications. A battery case is provided according to the present application, which is capable of integrating multiple battery packs, significantly improves its waterproof and sealing performance, and can be used in environments such as outdoors or garages.

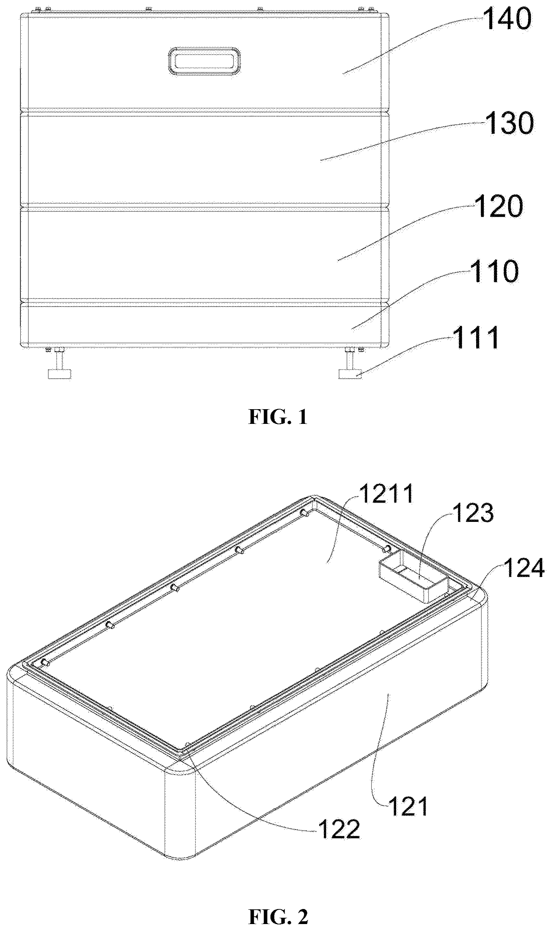

With reference to FIG. 1, a battery case is provided according to the present application, including a fixing base 110, multiple battery packs, and a switch module 140. The multiple battery packs are located between the fixing base 110 and the switch module 140, and the battery case is formed by self-weight stacking of the battery packs with the fixing base 110 and/or the switch module 140. A protruding portion, a sealing member, and a sealing frame are provided between the fixing base 110, the multiple battery packs, and the switch module 140. The sealing member is arranged between a surface provided with the protruding portion and the sealing frame, and is compressed by the surface provided with the protruding portion and the sealing frame, so as to achieve sealing. In the embodiment, two battery packs are provided as an example to explain the structure of the battery case.

References are made to FIGS. 1, 2, and 4. In an embodiment of the present application, the battery packs include a first battery pack 120 and a second battery pack 130. The first battery pack 120 and the second battery pack 130 are located between the fixing base 110 and the switch module 140, and a first surface 1211 of the first battery pack 120 is in contact with a second surface 1311 of the second battery pack 130. A sealing member 132 is provided between the first surface 1211 and the second surface 1311, and the sealing member 132 is compressed by the gravity of the second battery pack 130, so as to achieve sealing between the first battery pack 120 and the second battery pack 130.

Referring to FIGS. 1, 2, and 4, in an embodiment of the present application, the fixing base 110 is located on a side of the first battery pack 120 facing away from the second battery pack 130, and the connection manner between the fixing base 110 and the first battery pack 120 is the same as the connection manner between the first battery pack 120 and the second battery pack 130. Specifically, a surface of the fixing base 110 in contact with the first battery pack 120 has the same structure as the first surface 1211, and a surface of the first battery pack 120 in contact with the fixing base 110 has the same structure as the second surface 1311. In an embodiment of the present application, the switch module 140 is located on a side of the second battery pack 130 facing away from the first battery pack 120, and the connection manner between the switch module 140 and the second battery pack 130 is the same as the connection manner between the first battery pack 120 and the second battery pack 130. Specifically, a surface of the second battery pack 130 in contact with the switch module 140 has the same structure as the first surface 1211, and a surface of the switch module 140 in contact with the second battery pack 130 has the same structure as the second surface 1311. In the embodiment, the connection manner between the first battery pack 120 and the second battery pack 130 is used as an example to explain the self-weight stacking manner of the entire battery case.

With reference to FIGS. 1 to 3, the first battery pack 120 and the second battery pack 130 are of the same structure. In the embodiment, the first battery pack 120 is used as an example to explain the structure of the battery pack. In an embodiment of the present application, the first battery pack 120 includes a first housing 121, a sealing frame 122, a signal port 123, a battery module 125, a signal terminal 126, and an electrical module 127. The sealing frame 122 and the signal port 123 are provided on the first housing 121, and located on the first surface 1211 of the first housing 121. The battery module 125, the signal terminal 126, and the electrical module 127 are arranged inside the first housing 121.

With reference to FIGS. 1 and 2, in an embodiment of the present application, the first housing 121 is configured, for example, as a rectangular prism, and corners of the first housing 121 is configured, for example, as rounded corners. Surfaces of the first housing 121 are smooth, significantly reducing the risk of collision of the first housing 121, improving the wear resistance and service life of the first housing 121, and preventing harm to operators. In an embodiment of the present application, the first housing 121 is, for example, made of a thermosetting plastic composite material. The thermosetting plastic composite material is, for example, a sheet molding compound (SMC), whose raw materials are mainly composed of a special yarn (Glass fiber, GF), a unsaturated resin (UP), a low-shrinkage additive, a filler (MODEL, MD), and various other additives. The first housing 121 has advantages such as good electrical performance, good fatigue resistance, light weight, high strength, and corrosion resistance.

With reference to FIGS. 1, 2, and 5, in an embodiment of the present application, the surface of the first housing 121 in contact with the second battery pack 130 is defined as the first surface 1211, and the sealing frame 122 and the signal port 123 are arranged on the first surface 1211. The signal port 123 extends to the interior of the first battery pack 120. In an embodiment of the present application, the sealing frame 122 is arranged along an edge of the first surface 1211, and there is a predetermined distance between the sealing frame 122 and the edge of the first surface 1211. A peripheral portion of the sealing frame 122, on the first surface 1211, is defined as an edge area 124. In an embodiment of the present application, the sealing frame 122, for example, includes a flanged structure, and the second battery pack 130 is in contact with the flanged structure of the sealing frame 122. In another embodiment of the present application, the cross-section of the sealing frame 122 may be, for example, designed as a rectangle, and a length-to-width ratio of the rectangle ranges, for example, from 8:1 to 20:1. In an embodiment of the present application, the signal port 123 is located at a corner of the first housing 121 and is located within a plane enclosed by the sealing frame 122. In an embodiment of the present application, the signal port 123 is configured, for example, as a rectangular prism, and a height of the signal port 123 is higher than that of the sealing frame 122.

With reference to FIGS. 1 to 3, in an embodiment of the present application, the signal terminal 126 is located directly below the signal port 123, one end of the signal port 123 extends to the interior of the first battery pack 120, and the other end of the signal port 123 extends into the second battery pack 130, thereby connecting the signal terminals 126 of the first battery pack 120 and the second battery pack 130 to transmit signals. In an embodiment of the present application, the electrical module 127 and the signal terminal 126 are arranged side by side, and both of the electrical module 127 and the signal terminal 126 are located on the same side of the first housing 121. In an embodiment of the present application, the battery module 125 is arranged on one side in the first housing 121 and is opposite to the signal terminal 126, and the battery module 125 is electrically connected to both the electrical module 127 and the signal terminal 126.

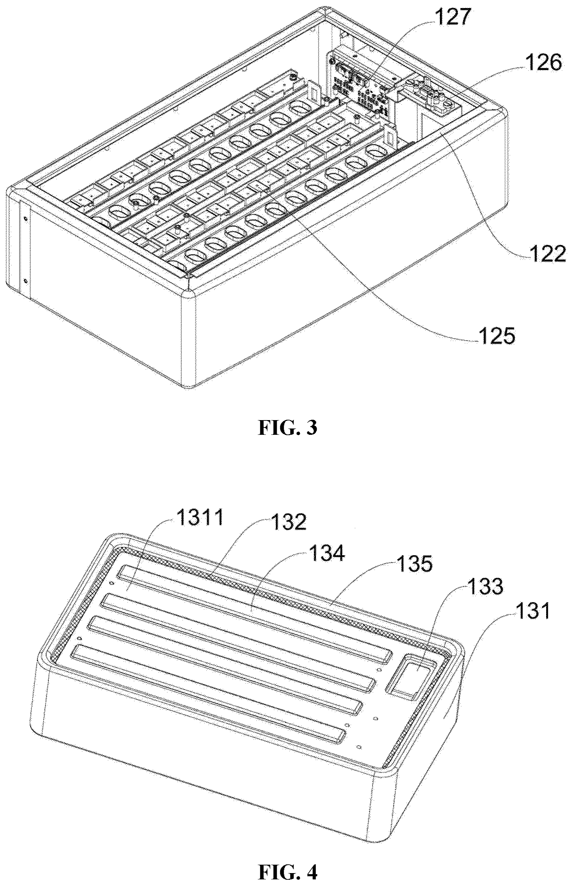

With reference to FIGS. 1 and 4, in an embodiment of the present application, the second battery pack 130 includes a second housing 131, a sealing member 132, a signal interface 133, a buffer portion 134, and a protruding portion 135. In an embodiment of the present application, a surface of the second housing 131 in contact with the first battery pack 120 is defined as a second surface 1311, and the sealing member 132, the signal interface 133, the buffer portion 134, and the protruding portion 135 are located on the second surface 1311. The sealing member 132, the signal interface 133, the buffer portion 134, and the protruding portion 135 are arranged at different positions on the second housing 131. In an embodiment of the present application, the protruding portion 135 is arranged along an edge of the second surface 1311, and the sealing member 132, the signal interface 133, and the buffer portion 134 are located within a plane enclosed by the protruding portion 135. In an embodiment of the present application, a width of the protruding portion 135 is, for example, less than or equal to a width of the edge area 124, and a height of the protruding portion 135 is greater than a height of the sealing frame 122. In an embodiment of the present application, the sealing member 132 is tightly attached to the edge of the protruding portion 135, and the plane enclosed by the sealing member 132 has the same shape and size as the plane enclosed by the sealing frame 122. When the second battery pack 130 is stacked with the first battery pack 120, there is a height difference between the protruding portion 135 and the sealing frame 122, and the sealing member 132 is disposed between the second surface 1311 enclosed by the protruding portion 135 and the sealing frame 122. The sealing frame 122 and the second surface 1311 are in contact with the sealing member 132, and the second battery pack 130 compresses the sealing member 132 under the action of gravity. The sealing frame 122, the protruding portion 135, and the sealing member 132 enclose to form a sealed space, thereby achieving sealing between the second battery pack 130 and the first battery pack 120. In an embodiment of the present application, the height difference between the protruding portion 135 and the sealing frame 122 is less than the maximum compression allowance of the sealing member 132. When the second battery pack 130 is stacked with the first battery pack 120, a portion protruding from the protruding portion 135 may directly contact the edge area 124 of the first housing 121, or may contact the edge area 124 through the sealing member 132, further relieving the pressure on the sealing member 132 between the protruding portion 135 and the sealing frame 122.

With reference to FIGS. 1 and 4, in an embodiment of the present application, the sealing member 132 is made of, for example, a rubber material. Further, the sealing member 132 is made of a rubber material, such as nitrile rubber, ethylene-propylene rubber, natural rubber, polyurethane rubber, fluororubber, hydrogenated nitrile rubber, or silicone rubber. In other embodiments, the sealing member 132 may also be made of materials such as graphite or polytetrafluoroethylene. It can be ensured that the sealing member 132 is compressed for a long time without plastic deformation and has good waterproof sealing performance. In an embodiment of the present application, the cross-section of the sealing member 132 is, for example, rectangular. In other embodiments, the cross-section of the sealing member 132 is, for example, an arc surface.

With reference to FIGS. 1 and 4, in an embodiment of the present application, the signal interface 133 is disposed within the plane enclosed by the sealing member 132 and is located directly above the signal port 123. In an embodiment of the present application, a length and a width of the signal interface 133 are greater than a length and a width of the signal port 123. One end of the signal port 123 extends into the first battery pack 120, and the other end of the signal port 123 extends into the signal interface 133, thereby connecting the signal terminals 126 of the first battery pack 120 and the second battery pack 130. In an embodiment of the present application, multiple buffer portions 134 are arranged within the plane enclosed by the sealing member 132 and arranged in parallel, and are opposite to the signal interface 133. In an embodiment of the present application, the buffer portions 134 are located in the sealed space formed by the sealing frame 122, the protruding portion 135, and the sealing member 132. The height of the buffer portions 134 is less than the height of the protruding portion 135, and the height of the buffer portions 134 is, for example, smaller than or equal to the height of the sealing frame 122. When the sealing member 132 is deformed under extreme conditions such as long service time or excessive compression, the buffer portions 134 directly contact the portion of the first surface 1211 within the sealing frame 122, thereby reducing the gravity borne on the sealing frame 122, and preventing the waterproof and sealing performance of the internal battery module from deteriorating due to compression deformation or damage of the sealing frame 122. In an embodiment of the present application, the number of buffer portions 134 is, for example, two to eight.

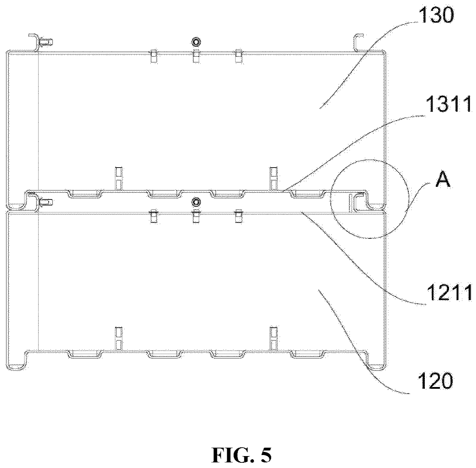

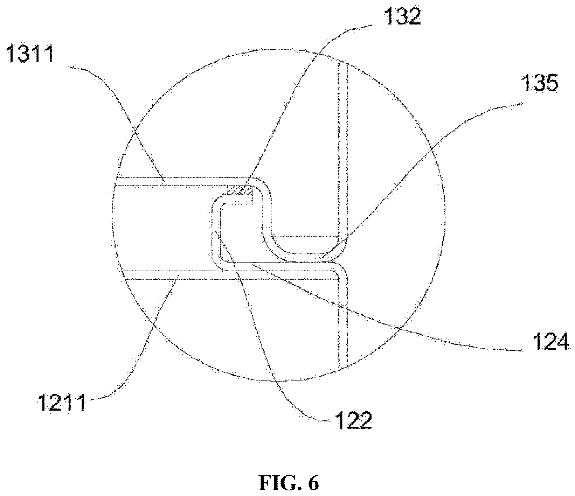

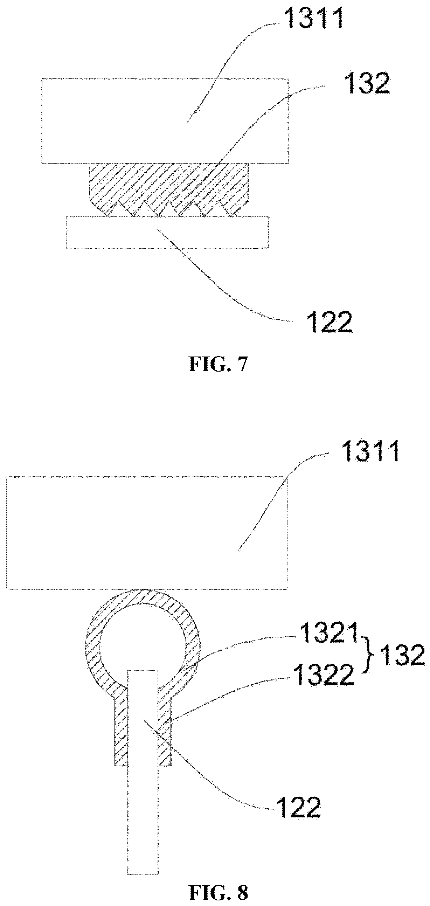

With reference to FIGS. 5 to 8, in an embodiment of the present application, in the case that the second battery pack 130 and the first battery pack 120 are sealed by self-weight, the sealing member 132 is located between a portion of the second surface 1311 within the protruding portion 135 and the sealing frame 122, and the sealing member 132 is, for example, disposed on the second surface 1311. In an embodiment of the present application, the sealing frame 122 and the sealing member 132 are located within the plane enclosed by the protruding portion 135, and a sum of the heights of the sealing frame 122 and the sealing member 132 is greater than the height of the protruding portion 135. A height difference between the sum of the heights of the sealing frame 122 and the sealing member 132 and the height of the protruding portion 135 is, for example, the compression amount of the sealing member 132. In this case, the protruding portion 135 directly contacts the edge area 124 of the first housing 121, thereby alleviating the compression exerted by the second battery pack 130 on the sealing member 132, and preventing the service life of the sealing member 132 from being reduced due to excessive compression. In an embodiment of the present application, for example, the compression amount of the sealing member 132 may be adjusted by controlling the height difference between the protruding portion 135 and the sealing frame 122. In other embodiments, the sealing member 132 is, for example, provided on the sealing frame 122; or, the sealing member 132 may be provided independently, and during use, the sealing member 132 is arranged between the second surface 1311 and the sealing frame 122 and is aligned with the sealing frame 122.

With reference to FIGS. 5 to 8, in an embodiment of the present application, the surface of the sealing member 132 is, for example, smooth, and the surface of the sealing member 132 in contact with the second surface 1311 and the surface of the sealing member 132 in contact with the sealing frame 122 are, for example, flat. In another embodiment of the present application, a surface of the sealing member 132 is, for example, a corrugated surface, and the corrugated sealing member 132 has a large resilience and a good protective effect. Specifically, the surface of the sealing member 132 in contact with the second surface 1311 is, for example, flat, and the surface of the sealing member 132 in contact with the sealing frame 122 is, for example, a corrugated surface. Alternatively, the surface of the sealing member 132 in contact with the second surface 1311 is, for example, a corrugated surface, and the surface of the sealing member 132 in contact with the sealing frame 122 is, for example, flat. Alternatively, the surface of the sealing member 132 in contact with the second surface 1311 and the surface of the sealing member 132 in contact with the sealing frame 122 are, for example, corrugated surfaces.

With reference to FIGS. 5 to 8, in another embodiment of the present application, the cross-section of the sealing frame 122 is, for example, designed to be rectangular, and a length-to-width ratio of the rectangle is, for example, 8:1 to 20:1. The sealing member 132 is configured as an arc structure. In an embodiment of the present application, the sealing member 132 includes an arc portion 1321 and rectangular portions 1322, the two rectangular portions 1322 are arranged on one side of the arc portion 1321. The two rectangular portions 1322 are arranged in parallel and there is a predetermined distance between the two rectangular portions 1322. The sealing frame 122 is located between the two rectangular portions 1322, the second surface 1311 is in contact with the arc portion 1321, and the second battery pack 130 exerts pressure on the arc portion 1321, which increases the compressed area of the sealing member 132, thereby reducing the pressure on the sealing member 132 and preventing the sealing member 132 from being deformed due to excessive deformation.

With reference to FIG. 1, in an embodiment of the present application, one side of the fixing base 110 facing away from the first battery pack 120 is provided with multiple support legs 111, and the number of support legs 111 is, for example, two to six. The multiple support legs 111 are symmetrically arranged on the fixing base 110. The support legs 111 are fixed to the ground or other equipment, so that the entire battery case can be fixed. In an embodiment of the present application, sub-modules, such as a switch box and an inverter, are provided in the switch module 140. In other embodiments, a sub-module with another function may be provided between the switch module 140 and the second battery pack 130 or provided on one side of the switch module 140 facing away from the second battery pack 130, and sealing is achieved through the gravity of the sub-module, so that the battery case can be designed to achieve different functionalities based on actual needs.

In summary, according to the battery case provided by the present application, the gravity of the sub-module is used to compress the sealing member, achieving waterproof and sealing. The sealing structure is simple, and the number of parts used is small, which facilitates the disassembly and assembly of different sub-modules of the battery case, improves the designability of the battery case, and further improves the comprehensive economy of the battery case. Moreover, the sealing structure is simplified, the waterproof and sealing performance of the battery case is improved, and the Ingress Protection (IP) Rating of the battery case is improved, thereby improving the service life and operational safety of the battery case.

The embodiments of the present application disclosed above are only used to help explain the present application. The embodiments do not describe all the details thoroughly, and are not intended to limit the present application to the specific embodiments. Apparently, numerous modifications and variations may be made based on the content of the specification. The specification selects and specifically describes these embodiments to explain the principles and practical applications of the present application well, so that those skilled in the art can make good use and understanding of the present application. The present application is limited only by the claims and widest scopes and equivalents of the claims.

## Claims

1. A battery case, **characterized by** at least comprising:
a fixing base, a top surface of which is provided with a protruding portion or a sealing frame;
at least one battery pack, arranged on the fixing base, wherein one of a top surface and a bottom surface of the battery pack is provided with the protruding portion, and the other of the top surface and the bottom surface of the battery pack is provided with the sealing frame;
a sealing member, located between the surface provided with the protruding portion and the sealing frame, and compressed by the surface provided with the protruding portion and the sealing frame; and
a switch module, arranged on the at least one battery pack, wherein a surface of the switch module in contact with the battery pack is provided with the protruding portion or the sealing frame;
wherein the fixing base and/or the switch module abut against the battery pack through the protruding portion or the sealing frame.

2. The battery case according to claim 1, wherein there is a height difference between the protruding portion and the sealing frame, and the height difference is smaller than a maximum compression amount of the sealing member.

3. The battery case according to claim 1, wherein the cross-section of the sealing frame is rectangular.

4. The battery case according to claim 3, wherein a surface of the sealing member in contact with the sealing frame is an arc surface.

5. The battery case according to claim 1, wherein the sealing frame comprises a flanged structure, and the sealing member is in contact with the flanged structure of the sealing frame.

6. The battery case according to claim 5, wherein a surface of the sealing member in contact with the sealing frame is flat.

7. The battery case according to claim 5, wherein a surface of the sealing member in contact with the sealing frame is a corrugated surface.

8. The battery case according to claim 1, wherein the battery pack comprises a housing, the protruding portion or the sealing frame is integrally formed with the housing, and the sealing member is arranged between the protruding portion and a surface of the housing provided with the sealing frame.

9. The battery case according to claim 1, wherein the battery pack comprises a signal port, the signal port is located inside the sealing frame and extends from a surface of the battery pack to the interior of the battery pack.

10. The battery case according to claim 1, wherein the battery pack comprises a buffer portion, the buffer portion is located in a space enclosed by the protruding portion, the sealing frame, and the sealing member.
